# EUROPÄISCHE PATENTSCHRIFT

(11) **EP 1 939 539 B1**
(45) Veröffentlichungstag und Bekanntmachung des Hinweises auf die Patenterteilung: **05.09.2012**
(21) Anmeldenummer: 07023720.1
(22) Anmeldetag: 07.12.2007
(51) Int. Cl.: F24D 3/10, F24D 19/10

(54) **Vorrichtung zum Speisen von Hoch- und Niedrigenergieverbrauchskreisen**
Device for supplying high and low energy circuits
Dispositif destiné à alimenter des circuits haute et basse consommation d'énergie

(30) Priorität: 22.12.2006 DE 202006019415 U
(43) Veröffentlichungstag der Anmeldung: 02.07.2008
(73) Patentinhaber: Watts Industries Deutschland Gesellschaft mit beschränkter Haftung, 76829 Landau (DE)
(72) Erfinder: Cattarius, Marco, 76857 Albersweiler (DE); Schehl, Ulrich, 76855 Annweiler (DE)
(74) Vertreter: Patentanwälte Bitterich, Dr. Keller, Schwertfeger

(56) Entgegenhaltungen:
- DD-A1- 246 823
- DE-A1- 19 642 721
- DE-C1- 19 821 256
- DE-U1-202004 019 873
- DE-U1-202005 005 008

## Beschreibung

Die Erfindung betrifft Vorrichtungen zum Speisen eines eine Vorlauf- und eine Rücklaufleitung aufweisenden Hochenergieverbrauchskreises und wenigstens eines eine Vorlauf- und eine Rücklaufleitung aufweisenden Niederenergieverbrauchskreises gemäß dem Oberbegriff des Anspruchs 1 wie beispielsweise aus der DE 20 2004 019 873 U1 bekannt.

Aus der DD 246 823 A1 sind Verfahren und Schaltungsanordnungen zum Betreiben von gekoppelten Wärmeverbrauchersystemen, die von einem Fernwärmenetz versorgt werden, bekannt. Vorgesehen sind ein vorgeschaltetes Wärmeverbrauchssystem und ein oder mehrere nachgeschaltete Wärmeverbrauchersysteme. Im Normalfall werden die nachgeschalteten Wärmeverbrauchersysteme aus der Rücklaufleitung des vorgeschalteten Wärmeverbrauchersystems gespeist. Wird die erforderliche Temperatur in den nachgeschalteten Wärmeverbrauchersystemen nicht erreicht, wird der Vorlauf des vorgeschalteten Wärmeverbrauchersystems mit dem Vorlauf der nachgeschalteten Systeme zusätzlich durch eine mengenregelbare Überströmleitung verbunden. Die Regelung der über die Überströmleitung direkt in die nachgeschalteten Wärmeverbrauchersysteme eingespeisten Menge an Heizmedium erfolgt in Abhängigkeit von der Temperatur im nachgeschalteten Wärmeverbrauchersystem. Auf diese Weise ist es möglich, die nachgeschalteten Wärmeverbrauchersysteme entweder nur aus dem Rücklauf des vorgeschalteten Wärmeverbrauchersystems oder parallel dazu auch aus dem Vorlauf des vorgeschalteten Wärmeverbrauchersystems zu speisen.

Aus der DE 198 21 256 C1 sind ein vergleichbares Verfahren und eine vergleichbare Vorrichtung bekannt. Durch die Verwendung zweier Drei-Wege-Mischventile wird erreicht, dass das nachgeschaltete Wärmeverbrauchersystem entweder nur vom Rücklauf des vorgeschalteten Wärmeverbrauchersystems oder nur vom Vorlauf des vorgeschalteten Wärmeverbrauchersystems oder regelbar vom Vorlauf und parallel dazu vom Rücklauf des vorgeschalteten Wärmeverbrauchersystems gespeist wird. Darüber hinaus offenbart diese Druckschrift ein Vier-Wege-Mischventil mit drei Eingängen und einem Ausgang sowie einem Stellantrieb, welches die Funktionen der beiden Drei-Wege-Mischventile in sich vereinigt.

Es versteht sich, dass die Verwendung von regelbaren Ventilen mit ihrer zugehörigen Sensorik, Elektronik und Motorik einen erheblichen Aufwand zur Folge hat. Dies gilt insbesondere für das in der DE 198 21 256 C1 offenbart Vier-Wege-Mischventil.

Der vorliegenden Erfindung liegt die Aufgabe zugrunde, eine Vorrichtung der eingangs genannten Art anzugeben, die erheblich einfacher aufgebaut ist.

Diese Aufgabe wird gelöst durch eine Vorrichtung mit den Merkmalen des Anspruchs 1 bzw. des Anspruchs 2.

Vorteilhafte Ausgestaltungen und Weiterbildungen sind Gegenstand der Unteransprüche.

Die vorliegende Erfindung verwendet anstelle der im Stand der Technik verwendeten Regel- und Mischventile eine aus wenigstens drei übereinandergestapelten kubischen Hohlkörpern zusammengesetzte Verteilerweiche, in der sich die Vor- und Rücklaufströme des die Heiz- oder Kühlenergie transportierenden Mediums aufgrund der Formgebung einerseits und der Verbindungen zwischen den Funktionskörpern und den jeweiligen Vor- und Rücklaufleitungen andererseits selbsttätig verteilen. Einziges bewegtes Element ist ein Ventil, welches einen Durchlass zwischen dem obersten und dem zweiten Hohlkörper verschließt, wenn der Vorlauf des Niederenergiekreislaufs nur vom Rücklauf des Hochenergiekreislaufs gespeist wird, und den Durchlass freigibt, wenn der Vorlauf des Niederenergiekreislaufs vom Rücklauf des Hochenergiekreislaufs und parallel dazu direkt vom Vorlauf des Erzeugers gespeist wird.

Vorteilhafterweise fluchtet der Durchlass mit der Erzeuger-Vorlaufleitung. Dadurch ist sichergestellt, dass genügend Erzeuger-Vorlauf den Vorlauf des Niederenergieverbrauchskreises erreicht, wenn dort ein erhöhter Energiebedarf besteht, der vom Rücklauf des Hochenergieverbrauchskreises allein nicht mehr gedeckt werden kann.

Gemäß einer Ausgestaltung der Erfindung ist an der Niederenergie-Vorlaufleitung ein Temperatursensor angeordnet, der das Ventil-Schaltsignal erzeugt.

Als Temperatursensor eignet sich insbesondere ein Bimetall-Schalter, der ohne jede Elektronik arbeitet.

Gemäß einer Ausgestaltung der Erfindung ist das Ventil ein Tellerventil.

Alternativ kann als Ventil auch ein Kolbenventil eingesetzt werden. Dieses hat den Vorteil, dass es weniger empfindlich ist bezüglich der durch die wechselnden Temperaturen unvermeidlichen Änderungen der Metallteile und der Fertigungs- und Montagetoleranzen.

Zur Aufnahme des Temperatursensors, der das Ventil steuert, und seiner Tauchhülse kann im Bereich der Niederenergie-Vorlaufleitung eine Muffe, vorzugsweise mit Innengewinde, vorgesehen sein. Dank dieser Ausgestaltung erhält man eine kompakte Ausführungsform mit der Möglichkeit, Temperatursensor und Ventil bereits werksseitig fest zu verdrahten.

Gemäß einer ersten praktischen Ausgestaltung der Erfindung besitzt die Verteilerweiche drei übereinandergestapelte Hohlkörper, wobei der oberste Hohlkörper auch Verbindung zur Niederenergie-Vorlaufleitung hat.

Gemäß einer alternativen Ausführungsform besitzt die Verteilerweiche vier übereinandergestapelte Hohlkörper, wobei der zweite Hohlkörper von oben eine Verbindung zur Niederenergie-Vorlaufleitung hat und Durchlässe sowohl zwischen dem obersten Hohlkörper und dem zweiten Hohlkörper von oben als auch zwischen dem zweiten Hohlkörper von oben und dem zweiten Hohlkörper von unten bestehen. Diese Durchlässe sind mittels Ventil alternativ verschließbar.

Gemäß einer Weiterbildung hierzu ist das Ventil ein Drei-Stellungs-Ventil. Dies macht es möglich, den Vorlauf des Niederenergieverbrauchskreises entweder vom Rücklauf des Hochenergieverbrauchskreises oder vom Vorlauf des Erzeugers oder von beiden parallel zu speisen.

Anhand der Zeichnung soll die Erfindung in Form eines Ausführungsbeispiels näher erläutert werden. Es zeigen jeweils rein schematisch als Beispiele für Hochenergie-und Niederenergieverbrauchskreise
- Fig. 1: einen Hochtemperaturverbrauchskreis und einen Niedertemperaturverbrauchskreis, beide von einem Erzeugerkreislauf über ein steuerbares Mischelement in Form einer im Schnitt dargestellten ersten Verteilerweiche gespeist, und
- Fig. 2: einen Hochtemperaturverbrauchskreis und einen Niedertemperaturverbrauchskreis, beide von einem Erzeugerkreislauf über ein steuerbares Mischelement in Form einer im Schnitt dargestellten zweiten Verteilerweiche gespeist.

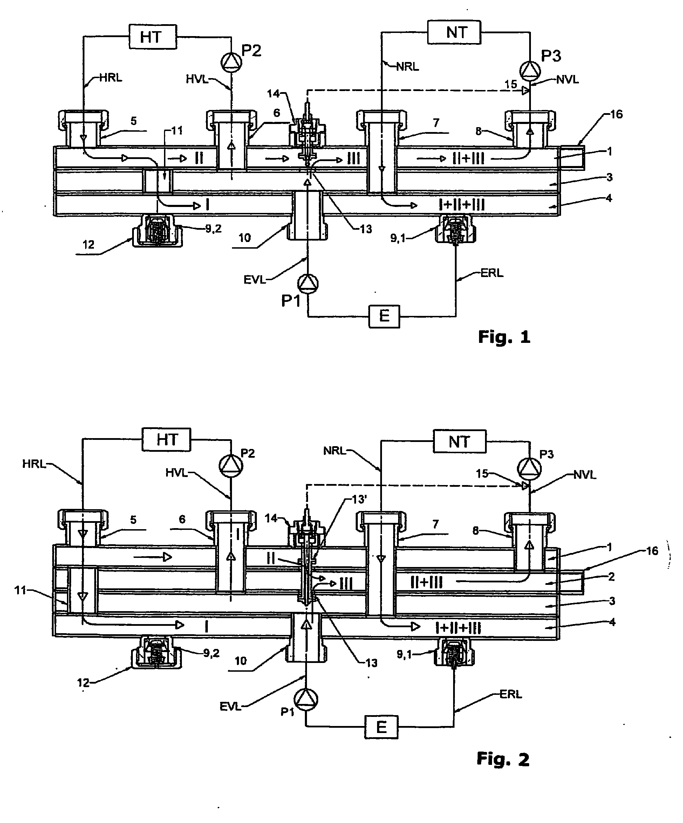

Fig. 1 zeigt rein schematisch einen Hochtemperaturverbrauchskreis HT mit einer Vorlaufleitung HVL mit eingesetzter Umwälzpumpe P2 und einer Rücklaufleitung HRL, einen Niedertemperaturverbrauchskreis NT mit einer Vorlaufleitung NVL mit eingesetzter Umwälzpumpe P3 und einer Rücklaufleitung NRL und einen Wärmeerzeugerkreislauf E mit einer Vorlaufleitung EVL mit eingesetzter Umwälzpumpe P1 und einer Rücklaufleitung ERL. Die Kopplung des Hochtemperaturkreislaufs HT und des Niedertemperaturkreislaufs NT mit dem Erzeugerkreislauf E erfolgt durch eine Verteilerweiche, die als steuerbares Mischelement funktioniert.

Die in Fig. 1 dargestellte Verteilerweiche besteht aus drei übereinander montierten langgestreckten kubischen Hohlkörpern 1, 3, 4. Der oberste Hohlkörper 1 trägt einen Anschlussstutzen 5, der die Verbindung zu der Hochtemperaturrücklaufleitung HRL herstellt, und einen Anschlussstutzen 8, der die Verbindung zu der Niedertemperaturvorlaufleitung NVL herstellt, und ist über einen Verbindungsstutzen 11 mit dem untersten Hohlkörper 4 verbunden.

Am untersten Hohlkörper 4 angeschlossen sind zwei Anschlussstutzen 9.1, 9.2, die wahlweise die Verbindung mit der Erzeugerrücklaufleitung ERL herstellen. Der nicht benötigte Anschlussstutzen 9.2 ist mit einem Verschlussdeckel 12 verschlossen. Des weiteren ist am untersten Hohlkörper 4 ein Anschlussstutzen 7 angeschlossen, der die Verbindung zu der Niedertemperaturrücklaufleitung NRL herstellt.

Am zweiten Hohlkörper 3 von unten sind ein Anschlussstutzen 6, der die Verbindung zur Hochtemperaturvorlaufleitung HVL herstellt, und einen Anschlussstutzen 10 angeschlossen, der die Verbindung zur Erzeugervorlaufleitung EVL herstellt.

Schließlich befindet sich zwischen dem obersten Hohlkörper 1 und dem zweiten Hohlkörper 3 von unten eine Durchlassöffnung 13, die in diesem Beispiel mit dem Anschlussstutzen 10 und damit mit der Erzeugervorlaufleitung EVL fluchtet. Der Durchlass 13 kann durch ein Ventil 14 verschlossen werden. Das Ventil 14 steht in Verbindung mit einem Temperatursensor 15 an der Niedertemperaturvorlaufleitung NVL. Ist die Temperatur in der Niedertemperaturvorlaufleitung NVL höher als eine vorgegebene Temperaturschwelle, so verschließt das Ventil 14 den Durchlass 13. Unterschreitet die Temperatur in der Niedertemperaturvorlaufleitung NVL die Temperaturschwelle, so gibt das Ventil 14 den Durchlass 13 frei.

Ist der Durchlass 13 verschlossen, so fließt das Heizmedium von der Erzeugervorlaufleitung EVL in den zweiten Hohlkörper 3 von unten, erreicht die Hochtemperaturvorlaufleitung HVL, durchströmt den Hochtemperaturverbrauchskreis HT und erreicht über die Hochtemperaturrücklaufleitung HRL und den Stutzen 5 den oberen Hohlkörper 1. Von hier strömt eine erste Teilmenge I durch den Verbindungsstutzen 11 in den untersten Hohlkörper 4 und über den Anschlussstutzen 9.1 in die Erzeugerrücklaufleitung ERL. Eine zweite Teilmenge II strömt durch den obersten Hohlkörper 1 und den Anschlussstutzen 8 in die Niedertemperaturvorlaufleitung NVL, durchströmt den Niedertemperaturverbrauchskreis NT und erreicht über die Niedertemperaturrücklaufleitung NRL und den Anschlussstutzen 7 den untersten Hohlkörper 4, um über den Anschlussstutzen 9.1 in die Erzeugerrücklaufleitung ERL abzuströmen. Bei geschlossenem Durchlass 13 ist somit der Niedertemperaturverbrauchskreis NT ausschließlich vom Rücklauf des Hochtemperaturverbrauchskreises HT gespeist.

Ist der Durchlass 13 wie in der Fig. 1 dargestellt geöffnet, so fließt eine Teilmenge III des Erzeugervorlaufs durch den Durchlass 13 direkt in den obersten Hohlkörper 1 und erreicht zusammen mit der Teilmenge II die Niedertemperaturvorlaufleitung NVL, durchströmt den Niedertemperaturverbrauchskreis NT und erreicht über die Niedertemperaturrücklaufleitung NRL und den Anschlussstutzen 7 den untersten Hohlkörper 4, von dem aus alle drei Teilmengen I, II, III gemeinsam durch den Anschlussstutzen 9.1 und die Erzeugerrücklaufleitung ERL den Erzeugerkreislauf E erreichen.

Schließlich erkennt man an der rechten Seite des obersten Hohlkörpers 1 eine Muffe 16, vorzugsweise mit einem Innengewinde. Diese Muffe 16 dient zur Aufnahme einer Tauchhülse für den Temperatursensor 15. Dank dieser Ausgestaltung ergibt sich eine kompakte Einheit, bei der Temperatursensor 15 und Ventil 14 bereits werksseitig fest verdrahtet werden können.

Fig. 2 zeigt ebenfalls rein schematisch den Hochtemperaturverbrauchskreis HT, den Niedertemperaturverbrauchskreis NT und den Erzeugerkreislauf E, die in diesem Ausführungsbeispiel jedoch über eine Verteilerweiche mit vier Hohlkörpern 1, 2, 3, 4 gekoppelt sind. An dem obersten Hohlkörper 1 sind die Hochtemperaturrücklaufleitung HRL und der Verbindungsstutzen 11 zu dem untersten Hohlkörper 4 angeschlossen. An dem zweiten Hohlkörper 2 von oben ist der Stutzen 8 für die Niedertemperaturvorlaufleitung NVL angeschlossen. Außerdem bestehen Durchlässe 13, 13' zwischen dem obersten Hohlkörper 1 und dem zweiten Hohlkörper 2 von oben sowie zwischen dem zweiten Hohlkörper 2 von oben und dem zweiten Hohlkörper 3 von unten. Beide Durchlässe 13, 13' sind mit Hilfe des Ventils 14 verschließbar.

Ist der untere Durchlass 13 geöffnet, der obere Durchlass 13' verschlossen, so wird der Niedertemperaturverbrauchskreis NT allein aus dem Erzeugervorlauf EVL gespeist. Ist der untere Durchlass 13 geschlossen, der obere Durchlass 13' dagegen offen, wird der Niedertemperaturverbrauchskreis NT allein aus dem Hochtemperaturrücklauf HRL gespeist. Sind wie in der Fig. 2 dargestellt jedoch beide Durchlässe 13, 13' geöffnet, wird der Niedertemperaturverbrauchskreis NT durch die Teilmenge II, die aus dem Hochtemperaturrücklauf HRL stammt, und die Teilmenge III, die direkt aus dem Erzeugervorlauf EVL stammt, parallel gespeist.

## Patentansprüche

1. Vorrichtung zum Speisen eines eine Vorlauf- und eine Rücklaufleitung (HVL, HRL) aufweisenden Hochenergieverbrauchskreises (HT) und wenigstens eines eine Vorlauf- und eine Rücklaufleitung (NVL, NRV) aufweisenden Niederenergieverbrauchskreises (NT) von einem gemeinsamen, eine Vorlauf- und eine Rücklaufleitung (EVL, ERL) aufweisenden Erzeuger (E) von Wärme- oder Kälteenergie aus über ein steuerbares Mischelement, wobei der Niederenergieverbrauchskreis (NT) entweder vom Rücklauf des Hochenergieverbrauchskreises (HT) oder sowohl vom Rücklauf des Hochenergieverbrauchskreises (HT) als auch vom Vorlauf des Erzeugers (E) gespeist wird und wobei das steuerbare Mischelement eine Verteilerweiche mit drei übereinander gestapelten Hohlkörpern (1, 3, 4) ist, **gekennzeichnet durch** die Merkmale:
- zwischen dem obersten Hohlkörper (1) und dem zweiten Hohlkörper (2) von unten existiert ein Durchlass (13,),
- der Durchlass (13) ist mittels eines Ventils (14) verschließbar.

2. Vorrichtung zum Speisen eines eine Vorlauf- und eine Rücklaufleitung (HVL, HRL) aufweisenden Hochenergieverbrauchskreises (HT) und wenigstens eines eine Vorlauf- und eine Rücklaufleitung (NVL, NRV) aufweisenden Niederenergieverbrauchskreises (NT) von einem gemeinsamen, eine Vorlauf- und eine Rücklaufleitung (EVL, ERL) aufweisenden Erzeuger (E) von Wärme- oder Kälteenergie aus über ein steuerbares Mischelement, wobei der Niederenergieverbrauchskreis (NT) entweder vom Rücklauf des Hochenergieverbrauchskreises (HT) oder vom Vorlauf des Erzeugers (E) oder von beiden parallel gespeist wird, **gekennzeichnet durch** die Merkmale:
- das steuerbare Mischelement ist eine Verteilerweiche mit vier übereinander gestapelten Hohlkörpern (1, 2, 3, 4),
- der unterste Hohlkörper (4) hat Verbindung
- zur Erzeuger-Rücklaufleitung (ERL),
- zur Niederenergie-Rücklaufleitung (NRL)
- und zum obersten Hohlkörper (1),
- der zweite Hohlkörper (3) von unten hat Verbindung
- zur Erzeuger-Vorlaufleitung (EVL)
- und zur Hochenergie-Vorlaufleitung (HVL),
- der zweite Hohlkörper (2) von oben hat Verbindung zur Niederenergie-Vorlaufleitung (NVL),
- der oberste Hohlkörper (1) hat Verbindung
- zur Hochenergie-Rücklaufleitung (HRL)
- und zum untersten Hohlkörper (4),
- Durchlässe (13, 13') bestehen zwischen dem obersten Hohlkörper (1), dem zweiten Hohlkörper (2) von oben und dem zweiten Hohlkörper (3) von unten,
- die Durchlässe (13, 13') zwischen dem obersten Hohlkörper (1) und dem zweiten Hohlkörper (2) von oben einerseits und dem zweiten Hohlkörper (2) von oben und dem zweiten Hohlkörper (3) von unten andererseits sind mittels eines Ventils (14) gleichzeitig oder alternativ verschließbar.

3. Vorrichtung nach Anspruch 2, **gekennzeichnet durch** das Merkmal:
- das Ventil (14) ist ein Drei-Stellungs-Ventil.

4. Vorrichtung nach einem der Ansprüche 1 bis 3 **gekennzeichnet durch** das Merkmal:
- der Durchlass (13) fluchtet mit der Erzeuger-Vorlaufleitung (EVL).

5. Vorrichtung nach einem der Ansprüche 1 bis 4, **gekennzeichnet durch** das Merkmal:
- an der Niederenergie-Vorlaufleitung (NVL) ist ein Temperatursensor (15) befestigt, der ein Ventil-Schaltsignal erzeugt.

6. Vorrichtung nach Anspruch 5, **gekennzeichnet durch** das Merkmal:
- der Temperatursensor (14) ist ein Bimetall-Schalter.

7. Vorrichtung nach einem der Ansprüche 1 bis 6, **gekennzeichnet durch** das Merkmal:
- das Ventil (14) ist ein Tellerventil.

8. Vorrichtung nach einem der Ansprüche 1 bis 6, **gekennzeichnet durch** das Merkmal:
- das Ventil (14) ist ein Kolbenventil.

9. Vorrichtung nach einem der Ansprüche 1 bis 8, **gekennzeichnet durch** das Merkmal:
- im Bereich der Niederenergie-Vorlaufleitung (NVL) ist eine Muffe (16) zur Aufnahme einer Tauchhülse für den Temperatursensor (15) vorgesehen.

10. Vorrichtung nach einem der Ansprüche 1 bis 9, **gekennzeichnet durch** die Merkmale:
- die Hohlkörper (1, 2, 3, 4) sind kubisch.

## Claims

1. A device for supplying a high power consumption circuit (HT) comprising a feed line and a return line (HVL, HRL) and at least one low power consumption circuit (NT) comprising a feed line and a return line (NVL, NRL) from a common generator (E), comprising a feed line and return line (EVL, ERL), for thermal, or refrigerating power via a controllable mixing element, the low power consumption circuit (NT) being supplied either by the return of the high power consumption circuit (HT) or both by the return of the high power consumption circuit (HT) and by the feed of the generator (E) and the controllable mixing element being a distributor switch with three hollow bodies (1, 3, 4) stacked one above the other, **characterised by** the features:
- between the top hollow body (1) and the second hollow body (2) there is provided a passage (13),
- the passage (13) may be closed by means of a valve (14).

2. A device for supplying a high power consumption circuit (HT) comprising a feed line and a return line (HVL, HRL) and at least one low power consumption circuit (NT) comprising a feed line and a return line (NVL, NRL) from a common generator (E), comprising a feed line, and return line (EVL, ERL), for thermal or refrigerating power via a controllable mixing element, the low power consumption circuit (NT) being supplied either by the return of the high power consumption circuit (HT) or by the feed of the generator (E) or by both in parallel, **characterised by** the features:
- the controllable mixing element is a distributor switch with four hollow bodies (1, 2, 3, 4) stacked one above the other,
- the bottom hollow body (4) is connected
- to the generator return line (ERL),
- to the lower power return line (NRL)
- and to the top hollow body (1),
- the second hollow body (3) from the bottom is connected
- to the generator feed line (EVL),
- and to the high power feed line (HVL),
- the second hollow body (2) from the top is connected to the lower power feed line (NVL),
- the top hollow body (1) is connected
- to the high power return line (HRL)
- and to the bottom hollow body (4),
- there are passages (13, 13") between the top hollow body (1), the second hollow body (2) from the top and the second hollow body (3) from the bottom,
- the passages (13, 13') between the top hollow body (1) and the second hollow body (2) from the top on the one hand and the second hollow body (2) from the top and the second hollow body (3) from the bottom on the other hand may be closed simultaneously or alternately by means of a valve (14) .

3. A device according to claim 2, **characterised by** the feature:
- the valve (14) is a three-position valve.

4. A device according to any one of claims 1 to 3, **characterised by** the feature:
- the passage (13) is aligned with the generator feed line (EVL).

5. A device according to any one of claims 1 to 4, **characterised by** the feature:
- a temperature sensor (15) is attached to the low power feed line (NVL), which generates a valve switching signal.

6. A device according to claim 5, **characterised by** the feature:
- the temperature sensor (14) is a bimetallic switch.

7. A device according to any one of claims 1 to 6, **characterised by** the feature:
- the valve (14) is a disc valve.

8. A device according to any one of claims 1 to 6, **characterised by** the feature:
- the valve (14) is a plunger valve.

9. A device according to any one of claims 1 to 8, **characterised by** the feature:
- in the region of the low power feed line (NVL) there is provided a sleeve (7,8) for accommodating a thermowell for the temperature sensor (15).

10. A device according to any one of claims 1 to 9, **characterised by** the features:
- the hollow bodies (1, 2, 3, 4) are cubic.

## Revendications

1. Dispositif d'alimentation d'un circuit à haute consommation d'énergie (HT) présentant une conduite de départ et une conduite de retour (HVL, HRL) et d'au moins un circuit à basse consommation d'énergie (NT) présentant une conduite de départ et une conduite de retour (NVL, NRL) depuis un générateur commun (E) d'énergie calorifique ou frigorifique, présentant une conduite de départ et une conduite de retour (EVL, ERL), via un élément mélangeur commandable, le circuit à basse consommation d'énergie (NT) étant alimenté soit par le retour du circuit à haute consommation d'énergie (HT), soit aussi bien par le retour du circuit à haute consommation d'énergie (HT) que par le départ du générateur (E) et l'élément mélangeur commandable étant un diviseur de flux à trois corps creux (1, 3, 4) superposés, **caractérisé en ce que** :
- il existe un passage (13) entre le corps creux supérieur (1) et le deuxième corps creux (2) à partir du bas (13),
- le passage (13) peut être ferme au moyen d'une soupape (14).

2. Dispositif d'alimentation d'un circuit à haute consommation d'énergie (HT) présentant une conduite de départ et une conduite de retour (HVL, HRL) et d'au moins un circuit à basse consommation d'énergie (NT) présentant une conduite de départ et une conduite de retour (NVL, NRL) depuis un générateur commun (E) d'énergie calorifique ou frigorifique, présentant une conduite de départ et une conduite de retour (EVL, ERL), via un élément mélangeur commandable, le circuit à basse consommation d'énergie (NT) étant alimenté soit par le retour du circuit à haute consommation d'énergie (HT), soit par le départ du générateur (E), soit par les deux en parallèle, **caractérisé en ce que** :
- l'élément mélangeur commandable est un diviseur de flux à quatre corps creux (1, 2, 3, 4) superposés,
- le corps inférieur (4) est relié
- à la conduite de retour du générateur (ERL),
- à la conduite de retour à basse énergie (NRL)
- et au corps creux supérieur (1),
- le deuxième corps creux (3) à partir du bas est relié
- à la conduite de départ du générateur (EVL)
- et à la conduite de départ à haute énergie (HVL),
- le deuxième corps creux (2) à partir du haut est relié à la conduite de départ à basse énergie (NVL),
- le corps creux supérieur (1) est relié
- à la conduite de retour à haute énergie (HRL)
- et au corps creux inférieur (4),
- il existe des passages (13, 13') entre le corps creux supérieur (1), le deuxième corps creux (2) à partir du haut et le deuxième corps creux (3) à partir du bas,
- les passages (13, 13') entre le corps creux supérieur (1) et le deuxième corps creux (2) à partir du haut d'une part et le deuxième corps creux (2) à partit du haut et le deuxième corps creux (3) à partir du bas d'autre part peuvent être fermés simultanément ou alternativement au moyen d'une soupape (14).

3. Dispositif selon la revendication 2, **caractérisé en ce que** :
- la soupape (14) est une soupape à trois positions.

4. Dispositif selon une des revendications 1 à 3, **caractérisé en ce que** :
- le passage (13) est en alignement avec la conduite de départ du générateur (EVL).

5. Dispositif selon une des revendications 1 a 4, **caractérisé en ce que** :
- un capteur de température (15), qui génère un signal de commutation de soupape, est fixé sur la conduite de départ à basse énergie (NVL).

6. Dispositif selon la revendication 5, **caractérisé en ce que** :
- le capteur de température (14) est un commutateur bimétallique.

7. Dispositif selon une des revendications 1 à 6, **caractérisé en ce que** :
- la soupape (14) est une soupape à disque.

8. Dispositif selon une des revendications 1 à 6, **caractérisé en ce que** :
- la soupape (14) est une soupape à piston.

9. Dispositif selon une des revendications 1 à 8, **caractérisé en ce que** :
- un manchon (16) destiné à recevoir un doigt de gant pour le capteur de température (15) est prévu dans la zone de la conduite de départ à basse énergie (NVL).

10. Dispositif selon une des revendications 1 à 9, **caractérisé en ce que** :
- les corps creux (1, 2, 3, 4) sont cubiques.
